# EUROPEAN PATENT APPLICATION

(11) **EP 1 511 305 A1**
(43) Date of publication of application: **02.03.2005**
(21) Application number: 04460037.7
(22) Date of filing: 27.07.2004
(51) Int. Cl.: H04N 5/64, H04N 5/765, H04N 7/16, H04N 7/167, H04N 5/445

(54) **Compact digital television decoder**

(30) Priority: 18.08.2003 PL 36171503
(71) Applicant: Advanced Digital Broadcast Polska Sp. zo.o., 65-119 Zielona Gora (PL); Advanced Digital Broadcast Ltd., Hsin-Tien City, Taipei Count, 231 Taiwan, R.O.C. (TW)
(72) Inventor: Charydczak, Patryk, 66-008 Wilkanowo poczta Swidnica (PL)
(74) Representative: Hudy, Ludwik

(57) **Abstract**

In a compact digital television decoder having a plug (102) and components with signal processing circuits, the plug (102) and the components with the signal processing circuits are installed on a printed circuit board (101) and together with the printed circuit board (102) are located in a compact casing (101), which is adopted to be connected with a television set (111).

## Description

The invention concerns a compact digital television decoder.

Digital television decoders (also called "set-top boxes") are typically rectangular in shape with dimensions of more than ten, to a few dozen centimeters on side. A decoder with such dimensions is comfortable in use for large rooms. It may, in addition, be used for decorative purposes. The decoder and the television set are usually linked by a SCART cable, terminated at both ends with SCART plugs, which are plugged to SCART sockets in the decoder and in the television set. Together with the SCART cable, such decoders take up a lot of space.

There also exist digital television decoders, which are built into television sets. The advantage of such a solution is that it does not require additional space for a separate decoder. However, such a solution is not universal, because the decoder forms a permanent component of the television set, making it difficult or even impossible to exchange.

There also exist modules, which expand the functionality of television sets. One such solution is described in the American patent description no. US 5,949,493 *"Television Receiver With External Access".* It relates to detachable extension cards, which perform specific functions. These cards are slid into the television casing and screwed or bolted into place with a special screw or bolt. Such a solution requires the manufacture of a television set with a casing specially customized to accommodate these detachable cards. Therefore, such a solution is not universal and cannot be applied on a wider scale in current television receivers.

There is also an interface, described in the American patent description No. US 5,592,234 "*Interface System for a television Receiver".* This interface is especially designed for television sets and allows connecting circuits providing additional functions, such as *Picture in Picture, CD-Video* or *pay-per-view* system, to the TV set. Still, the described system also requires the modification of the television set and cannot be applied in standard television sets.

The purpose of the present invention is to create a decoder, with small dimensions, which would not require a cable to connect it with the television set.

The essence of the invention is that in the compact digital television decoder - containing components with circuits for signal processing and a plug - the components, together with the signal processing circuits and the plug, are mounted on a printed circuit board, and together placed in a compact casing, which is adopted to be connected with a television set.

The components mounted on the printed circuit board may include an antenna socket, a power supply socket, and a terminal to connect the receiver of remote control signals. They may also include a power supply unit, to which the power voltage is supplied.

The voltage, supplied to the power supply socket, should be stabilized with an external power supply unit.

Among the components installed in the printed circuit board there may be a terminal of the remote control unit signal receiver, which is connected by means of a cable to the remote control unit signal receiver, and/or a terminal of the remote control unit signal receiver, which is connected by means of a wireless link to the remote control unit signal receiver.

The plug, installed in the printed circuit board, should be a SCART plug.

The plug mounted on the printed circuit board should be an element joining the television set with the decoder enclosed in the compact casing.

The plug mounted on the printed circuit board should optimally be a male plug, and the socket of the television set a female socket, or the plug installed in the printed circuit board should be a female plug and the socket of the television set a male socket.

The compact casing should optimally consist of the main part and the extension part, with a plug. The main part and the extension part should be separable.

There should optimally be mounting elements present, with fasteners connected to the compact casing.

The invention will now be described by way of example and with reference to the accompanying drawings in which:
Fig. 1 is a perspective view of a television set and a decoder prior to their connection;
Fig. 2 is perspective view of a printed circuit board of a decoder;
Fig. 3 is a block schematic of a decoder;
Fig. 4 is a perspective view illustrating a decoder with an integrated extension part;
Fig. 5 is a perspective view illustrating a decoder with a separate extension part; and
Fig. 6 is a perspective view illustrating a decoder equipped with fasteners.

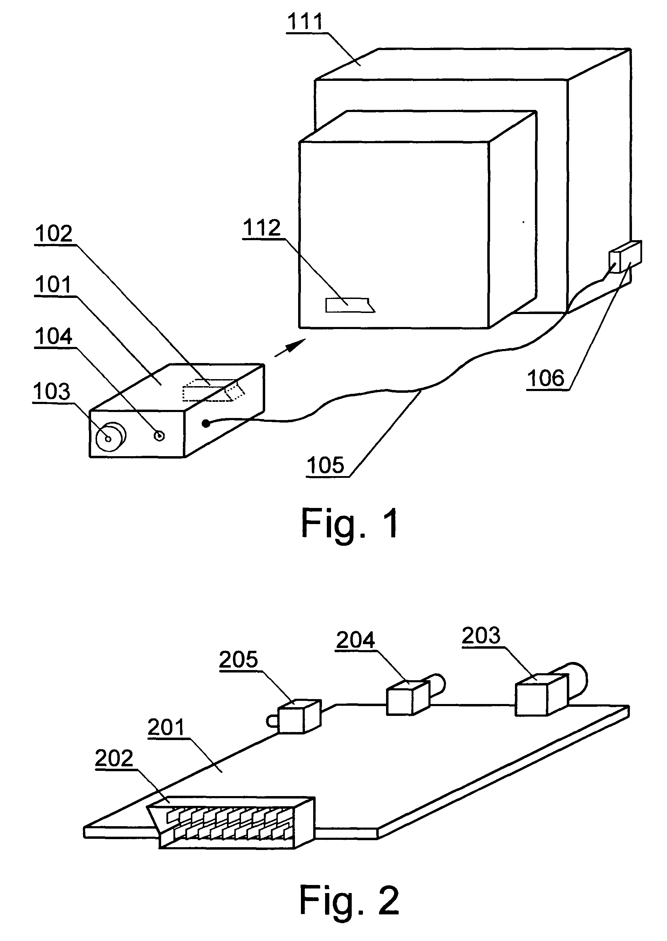

The decoder, placed in the compact casing 101, and illustrated in Fig. 1, is rectangular in shape. Its dimensions do not exceed a dozen or so centimeters. It has an antenna socket 103, a power supply socket 104 and a SCART plug 102. The shape of the SCART plug corresponds to the shape of the socket 112 of the television set 111. After connecting the decoder with the receiver 112 the SCART plug is inside the socket of the television set 111, thus serving as an element joining the decoder in compact casing 101, with the television set 111 into a single unit.

The SCART plug 102 may be either a male or a female type plug. The socket of the television set must be respectively a female or a male type socket. The decoder also contains a terminal 105, to which the remote control unit signal receiver 106 is connected. The receiver 106 is located in a place, from which it is easy to receive signals of the remote control unit. In the solution, shown in Fig. 1, it is fastened to the side of the television set. The signal receiver may be connected to the decoder by means of a cable, or using a low-power wireless link, which suffices for communications over small distances.

Fig. 2 shows a view of certain elements of the decoder, mounted on the printed circuit board 201. The location of the elements is not critical. They should be located as to ensure the smallest possible dimensions of the decoder, at the same time allowing for correct operational conditions of all the circuits. The printed circuit board 201 may have multiple layers, and elements may be placed on both sides. Fig. 2 shows the SCART 202 plug, which is permanently fixed to the printed circuit board 201, and the antenna socket 203, the power supply socket 204, and also the cable 205 for connecting the remote control unit signal receiver.

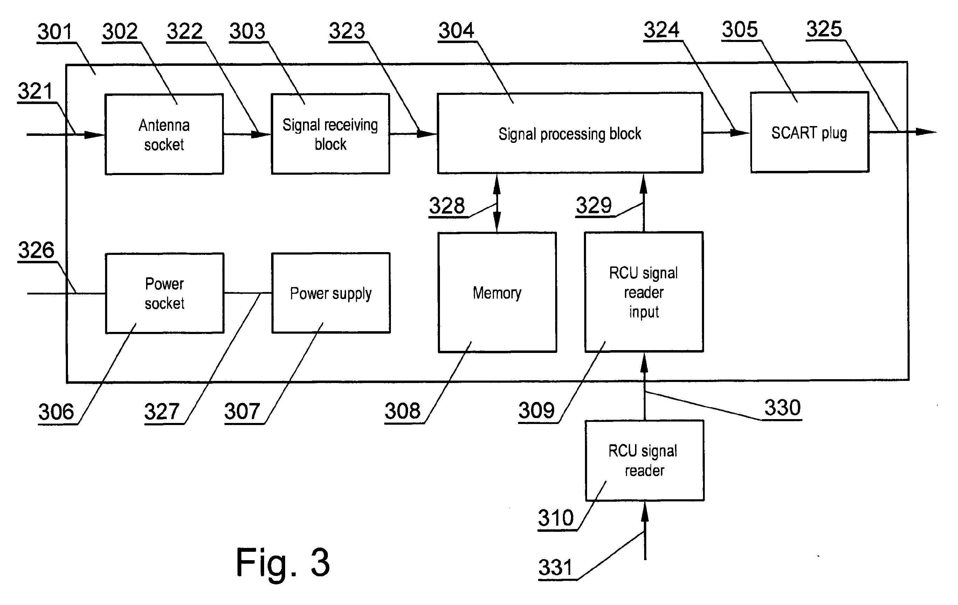

The block schematic for the decoder is presented in Fig. 3. The television signal 321 is input to the antenna socket 302 of the decoder 301. It is then transmitted through the signal line 322 to the signal reception block 303, which comprises a tuner and a demodulator. The signal reception block 303 outputs a stream of digital television data 323 to the signal processing block 304, where the stream is decoded. Audio/video data 324, in a format acceptable to the television set, are transmitted to the SCART plug 305, which is connected with the SCART socket in the television set by means of a link 325. The signal processing block 304 uses memory 308, to which it is connected through a bus 328. The remote control unit signal receiver 310 receives signals 331 sent by the remote control unit and transmits them through a line 330 (wire or wireless) to the terminal 309. The signals of the remote control unit are then transmitted through the line 329 to the signal processing block 304.

Depending on the level of complexity, a power supply unit 307 may be located on the decoder printed circuit board. The power supply signal 327 reaches the power supply unit 307 from the power supply socket 306, which is fitted with the power cable 326. The power supply unit 307 may also be located outside the decoder.

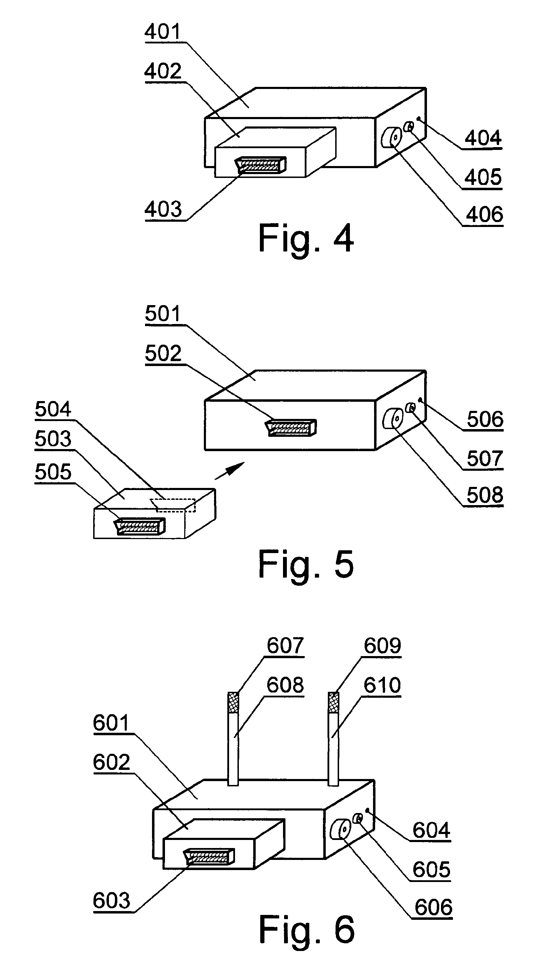

Fig. 4 demonstrates another embodiment of a decoder, which consists of a wide main part 401 and a slim extension part 402. The extension part ends with a SCART plug 403. In this solution the antenna socket 404, the terminal to remote control unit signal receiver 405, and the power supply socket 406, are all located on the side of the casing. The slim extension part allows for connecting the decoder to the casing of the television set having the SCART socket installed in a deep opening.

Fig. 5 shows an embodiment to the one shown in Fig. 4. The difference is in that the wide main part 501 and the slim extension part 503 are separate. The wide main part 501 is the decoder itself and it ends with a SCART plug 502. On its side it has the antenna socket 506, the terminal to the remote control unit signal receiver 507, and the power supply socket 508. The extension part 503 is equipped with a SCART plug 504 and a SCART socket 505. Depending on the type of the television set casing, users may connect the main part 501 directly, or through the extension part 503. The extension part 503 may have a fixed length. It may be also a telescope, which allows the user adjusting its length to the length of the television set.

The solutions presented in Figs. 4 and 5 differ in that the one shown in Fig. 4 includes the extension part 402 which is connected permanently to the main part 401. Some of the decoder circuits may thus be installed inside the extension part 402. In the solution shown in Fig. 5, all decoder circuits are installed inside the main part 501. It is apparent that the extension part may also be applied in the decoder shown in Fig. 4.

In case the decoder is of considerable dimensions, or when the SCART socket in the television set is loose, additional means for fixing the decoder to the casing may be necessary. The decoder with additional fastenings is illustrated in Fig. 6. Just as the decoder shown in Fig. 4, it has a wide main part 601 with an antenna socket 604, a terminal 605 of the receiver and a power supply socket 606 and a slim extension part 602, which ends with a SCART plug 603. The decoder also has a left 608 mounting element and a right 610 mounting element. Each of them is equipped with a fastener 607, 609, respectively. The mounting elements may, for example, have the form of adjustable length straps. The fasteners may also be anchors, fastened in the openings of the television set casing, or consist of two parts, one of which is permanently fixed to the fastener, and the second detachable and connected to the television set casing (with, for example, an adhesive). The first and the second parts may later be connected together with snaps, Velcro, or some other method.

Taking into account the progress of circuit, it is possible to mount other circuits on the printed circuit board of the decoder, thus further increasing its functionality. Such circuits may include a Smartcard reader, allowing the use of cards with access control circuits for descrambling of television signals of specific broadcasters. The decoder may also be equipped with other connectors, such as a USB connector for connecting external devices - for example, mass memory, e.g. a hard disk, for storing television signals. The decoder may also be equipped with a modem, which allows connecting to a telephone network.

## Claims

1. A compact digital television decoder having components with signal processing circuits and having a plug, **characterized in that** the plug (102, 202) and the components with the signal processing circuits are installed on a printed circuit board (201) and together with the printed circuit board (202) are located in a compact casing (101), which is adopted to be connected with a television set (111).

2. The compact digital television decoder, according to claim 1, **characterized in that** the components installed on the printed circuit board, include an antenna socket (103), a power supply socket (104) and a terminal (105) for connecting an RCU signal receiver (106).

3. The compact digital television decoder according to claim 1, **characterized in that** one of the components installed on the printed circuit board is a power supply unit (307), to which a power voltage is supplied.

4. The compact digital television decoder according to claim 2, **characterized in that** a power voltage supplied to the power supply socket (104) is stabilized by an external power supply unit.

5. The compact digital television decoder according to claim 1, **characterized in that** one of the components installed on the printed circuit board is a terminal (105) of a remote control unit signals receiver, which is connected by means of a cable with a remote control unit signals receiver (310).

6. The compact digital television decoder according to claim 1, **characterized in that** one of the components installed on the printed circuit board is a terminal (105) of remote control unit signals receiver, which is connected by means of a wireless link with a remote control unit signals receiver (310).

7. The compact digital television decoder according to claim 1, **characterized in that** the plug installed on the printed circuit board is a SCART plug (202).

8. The compact digital television decoder according to claim 1, **characterized in that** the plug (102, 202), installed in the printed circuit board is an element joining the television set (111) with the decoder enclosed in the compact casing (101).

9. The compact digital television decoder according to claim 1, **characterized in that** the plug installed in the printed circuit board is a male type plug and the socket of the television set is a socket of female type.

10. The compact digital television decoder according to claim 1, **characterized in that** the plug installed in the printed circuit board is a female type plug, and the socket of the television set is a socket of male type.

11. The compact digital television decoder according to claim 1, **characterized in that** the compact casing consists of the main part (501) and the extension part (503), which ends with a plug (505).

12. The compact digital television decoder, according to claim 7, **characterized in that** the main part (501) and the extension part (503) are detachable.

13. The compact digital television decoder according to claim 1, **characterized in that** the compact casing has mounting elements (608, 610) ended with fasteners (607, 609).
